# EUROPEAN PATENT SPECIFICATION

(11) **EP 1 769 952 B1**
(45) Date of publication and mention of the grant of the patent: **31.03.2010**
(21) Application number: 06019381.0
(22) Date of filing: 15.09.2006
(51) Int. Cl.: B60H 1/00

(54) **Ventilation assembly for a vehicle**
Gebläseanordung für ein Fahrzeug
Boîtier de pulseur d'un véhicule

(30) Priority: 29.09.2005 IT TO20050677
(43) Date of publication of application: 04.04.2007
(73) Proprietor: DENSO THERMAL SYSTEMS S.p.A., 10046 Poirino (Torino) (IT)
(72) Inventor: Cigaina, Alberto, 10046 Poirino (Torino) (IT)
(74) Representative: Marchitelli, Mauro

(56) References cited:
- EP-A1- 0 549 475
- US-A- 3 671 095
- US-A- 4 672 819

## Description

The present invention relates to a double fan ventilation assembly for vehicles. More specifically, the invention relates to a ventilation assembly for vehicles with a centrifugal ventilator including an electric motor that actuates in rotation two mutually coaxial centrifugal fans positioned at opposite sides relative to the motor.

With respect to ventilation assemblies with a single fan, a double fan ventilation assembly has higher efficiency, can operate at a lower rotation velocity and consequently is quieter.

In ventilation assemblies for vehicles, it is necessary to assure the possibility of removing the fan to perform extraordinary maintenance operations. For example, in case of failure, it must be possible to replace the motor and fan set.

In double fan ventilation assemblies, each fan is housed in a respective conveying section which defines around the fan a volute-shaped conduit for conveying the air flow. This arrangement makes it difficult to extract the fan.

US4672819 discloses a cooling unit for air conditioners including a removable lower case portion. The blower can be readily removed downwardly from the cooling unit by detaching the removable portion.

The object of the present invention is to provide a ventilation assembly for vehicles with double fan, in which it is possible to remove the assembly comprising the electric motor and the two fans in simple, rapid fashion.

According to the present invention, said object is achieved by a ventilation assembly for vehicles having the characteristics set out in the claims.

The present invention shall now be described in detail with reference to the accompanying drawings, provided purely by way of non limiting example, in which:
- Figure 1 is an exploded perspective view of a ventilation assembly according to the present invention,
- Figures 2 and 3 are schematic lateral views showing a preliminary step of the removal of the ventilator assembly,
- Figure 4 is a perspective view of the ventilation assembly of Figure 1 in assembled position, and
- Figure 5 is a perspective view showing one of the steps of the removal of the ventilation assembly according to the invention.

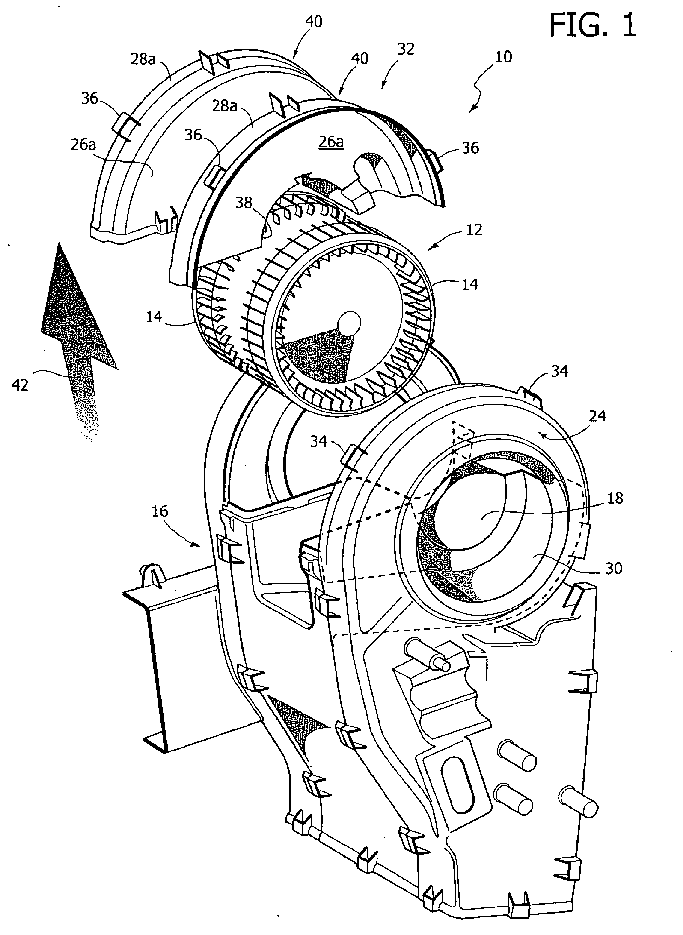

With reference to Figure 1, the number 10 designates a ventilation assembly for vehicles. The ventilation assembly 10 is to be mounted in the dashboard of a vehicle together with a system for the treatment and distribution of an air flow.

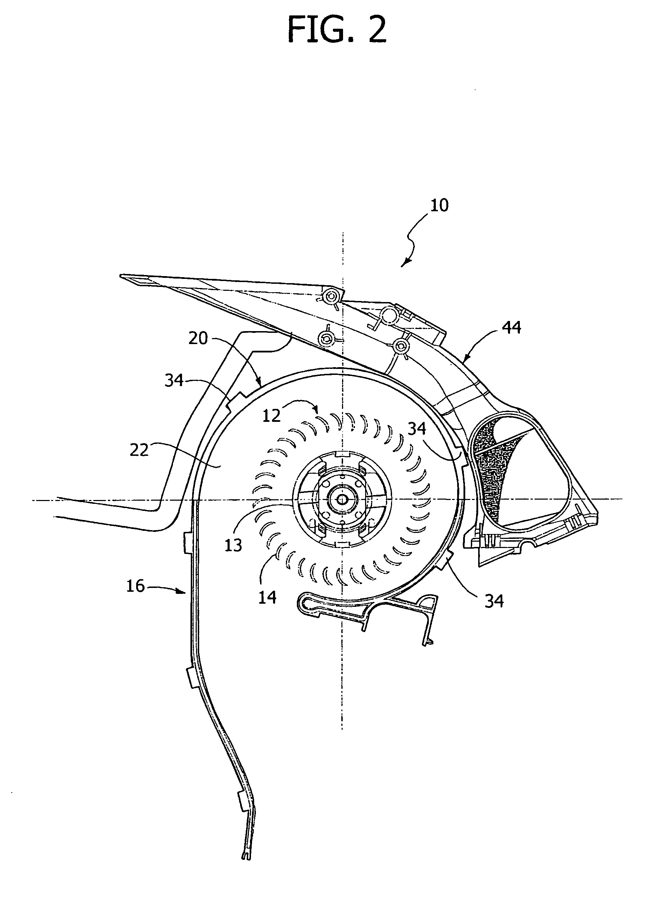

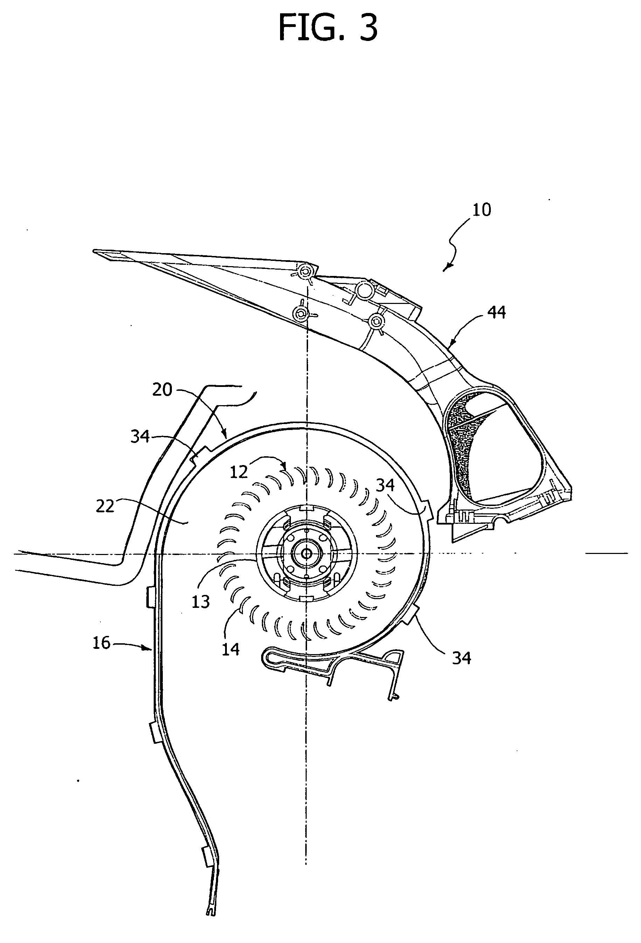

The ventilation assembly 10 comprises a centrifugal ventilator 12 including an electric motor designated by the reference 13 in Figures 2 and 3 and two mutually coaxial centrifugal fans positioned at opposite sides relative to the motor. The centrifugal fans are fastened on respective opposite ends of the electric motor shaft. The electric motor has a cylindrical body whose diameter is substantially smaller than the diameter of the centrifugal fans 14. The two fans 14 are axially distanced from each other by a length equal to or greater than the length of the body of the electric motor.

The ventilation assembly 10 comprises a case 16 made of plastic material in which is defined a chamber for collecting the air flow produced by the ventilator 12. In known fashion, the air flow is subjected to a heating or cooling operation and it is then distributed into the passenger compartment of the vehicle by means of various distribution conduits.

The case 16 has a seat 18 with semi-cylindrical shape which serves as a housing for the bottom half of the electric motor 13.

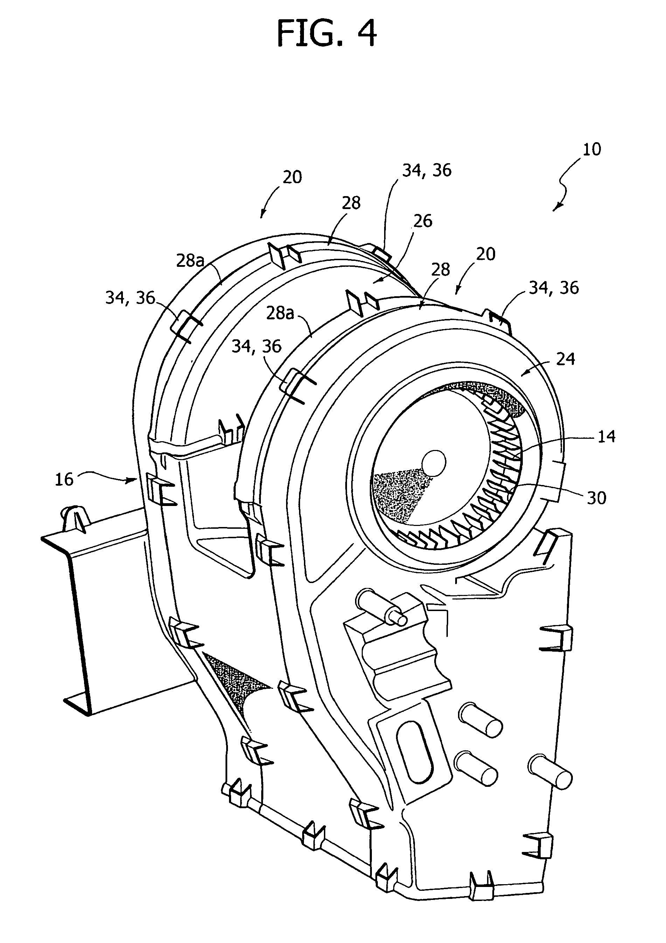

With reference to Figure 4, which shows the ventilation assembly 10 in assembled position, the case 16 comprises two conveying sections 20 distanced from each other in the direction of the axis of the ventilator. Each centrifugal fan 14 is housed in a respective conveying section 20. Each conveying section 20 defines around the fan 14 a volute-shaped conveying conduit designated by the reference 22 in Figures 2 and 3.

With reference again to Figure 4, each conveying section 20 has an outer frontal surface 24, an inner frontal surface 26 and a curved lateral surface 28. The surfaces 24, 26 and 28 define the aforesaid volute-shaped channel 22. Each outer frontal surface 24 has a respective frontal opening 30 for the entry of the air flow, facing the inner part of the respective centrifugal fan 14.

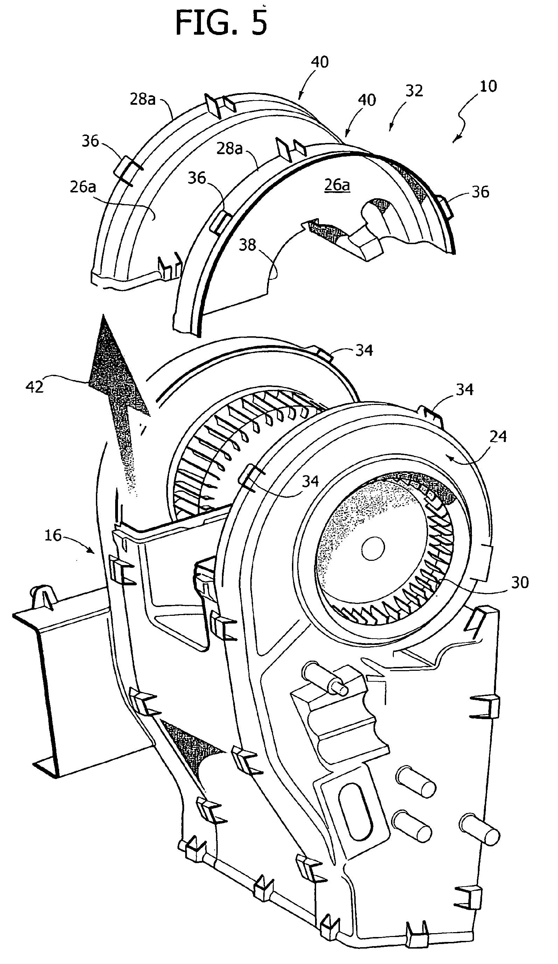

With reference to Figures 1 and 5, the case 16 comprises a removable upper shell 32 connected in removable fashion to the remaining part of the case. The removable shell 32 can be fastened to the remaining part of the case by forming mutually co-operating snap-on engagements 34, 36 or by means of screws or by means of any other removable fastening system. The removable upper shell 32 has a central portion with a semi-cylindrical seat 38 which is complementary with respect to the semi-cylindrical seat 18 and which receives the upper part of the electrical motor 13. When the shell 32 is mounted on the case 16, the two semi-cylindrical seats 18, 38 form a cylindrical seat in which the electric motor 13 is housed and retained.

The removable upper shell 32 has two lateral portions 40 situated at opposite sides relative to the semi-cylindrical seat 38. Each of the two lateral portions 40 has a radial wall 26a which defines the upper part of the inner frontal surface of the respective conveying section 20. Each lateral portion 40 of the shell 32 also has a curved wall 28a that constitutes a part of the curved lateral surface 28 of the respective conveying section 20. As shown in Figures 1 and 5, the shape of the removable upper shell 32 is such that after its removal the remaining part of the case 16 has an upper opening with such shape and dimensions as to allow the extraction of the ventilator 12 in the direction indicated by the arrow 42 in Figures 1 and 5.

The sequence of operations for the removal of the ventilator 12 of the fan assembly 10 shall be described below.

Figure 2 shows a lateral view of the ventilation assembly 10 mounted in the dashboard of a vehicle. Above the ventilation assembly 10 described previously is mounted an air diffusion conduit 44 able for example to distribute an air flow towards the base of the front windshield of the vehicle. The first operation, as shown schematically in Figure 3, entails disassembling and removing the air diffusion conduit 44, possibly after removing an upper covering panel of the dashboard (not shown).

After the removal of the air diffusion conduit 44, the operator has free access to the ventilation assembly 10 that is in the configuration shown in Figure 4. At this point, the operator removes the removable upper shell 32 as shown in Figure 5. Lastly, the set constituted by the electric motor 13 and by the fans 14 can be removed by extracting it upwards in the direction indicated by the arrow 42 in Figure 1.

Naturally, without altering the principle of the invention, the construction details and the embodiments may be widely varied from what is described and illustrated herein, without thereby departing from the scope of the invention, as defined by the appended claims.

## Claims

1. A ventilation assembly (10) for vehicles, comprising:
- a centrifugal ventilator (12) including an electric motor (13) that actuates in rotation two mutually coaxial centrifugal fans (14) positioned at opposite sides relative to the motor (13), and
- a case (16) having a cylindrical central seat (18, 38) for housing the electric motor (13) and two conveying sections (20) within which are housed the respective fans (14), each conveying section (20) having an outer frontal surface (24), an inner frontal surface (26) and a curved surface (28) which define around the respective fan (14) a volute-shaped conduit (22) for conveying the air flow produced by the respective fan (14),
**characterised in that** the case (16) comprises a removable upper shell (32) having a central portion with a semi-cylindrical seat (38) defining the upper part of the cylindrical seat (18, 38) for housing the electric motor (13) and two lateral portions (32), each of said lateral portions (32) having a radical wall (26a) defining the upper part of the inner frontal surface (26) of the respective conveying section (20) and a curved wall (28a) defining a part of the curved lateral surface (28) of the respective conveying section (20), the shape of the removable upper shell (32) being such that the centrifugal ventilator (12) can be extracted from the case (16) upwards after the removal of the shell (32).

2. Ventilation assembly as claimed in claim 1, **characterised in that** the outer frontal wall (24) of each conveying section (20) is provided with an opening (30) for the entry of an air flow facing the inner part of the respective centrifugal fan (14).

3. Ventilation assembly as claimed in claim 1, **characterised in that** the removable upper shell (32) and the remaining part of the case 16 are provided with mutually co-operating fastening means (34, 36).

## Patentansprüche

1. Gebläseanordnung (10) für Fahrzeuge, mit:
- einem Zentrifugalventilator (12), der einen Elektromotor (13) enthält, der in Rotation zwei zueinander koaxiale Zentrifugallüfter (14) betätigt, die relativ zum Motor (13) an gegenüberliegenden Seiten angeordnet sind, und
- ein Gehäuse (16) mit einem zylindrischen zentralen Sitz (18, 38) zur Aufnahme des Elektromotors (13) und zwei Führungsabschnitten (20), in denen die jeweiligen Lüfter (14) untergebracht sind, wobei jeder Führungsabschnitt (20) eine äußere Frontoberfläche (24), eine innere Frontoberfläche (26) und eine gekrümmte Oberfläche (28) hat, die um den jeweiligen Lüfter (14) einen spiralförmigen Kanal (22) definieren, um den vom jeweiligen Lüfter (14) erzeugten Luftstrom zu führen,
**dadurch gekennzeichnet, dass** das Gehäuse (16) einen abnehmbaren oberen Mantel (32) mit einem zentralen Abschnitt mit einem halbzylindrischen Sitz (38) aufweist, der den oberen Teil des zylindrischen Sitzes (18, 38) zur Aufnahme des Elektromotors (13) definiert, sowie zwei seitliche Abschnitte (32), wobei jeder der seitlichen Abschnitte (32) eine radiale Wand (26a) hat, die den oberen Teil der inneren Frontoberfläche (26) des jeweiligen Führungsabschnitts (20) definiert, und eine gekrümmte Wand (28a), die einen Teil der gekrümmten seitlichen Oberfläche (28) des jeweiligen Führungsabschnitts (20) definiert, wobei der abnehmbare obere Mantel (32) eine solche Form hat, dass der Zentrifugalventilator (12) nach der Abnahme des Mantels (32) nach oben aus dem Gehäuse (16) herausgezogen werden kann.

2. Gebläseanordnung nach Anspruch 1, **dadurch gekennzeichnet, dass** die äußere Frontwand (24) jedes Führungsabschnitts (20) mit einer Öffnung (30) für den Eintritt des Luftstroms ausgeführt ist, die zum jeweiligen Zentrifugallüfter (14) weist.

3. Gebläseanordnung nach Anspruch 1, **dadurch gekennzeichnet, dass** der abnehmbare obere Mantel (32) und der übrige Teil des Gehäuses (16) mit gegenseitig zusammenwirkenden Befestigungsmitteln (34, 36) versehen sind.

## Revendications

1. Groupe de ventilation (10) pour véhicules, comprenant :
- un ventilateur centrifuge (12) incluant un moteur électrique (13) qui entraîne en rotation deux rotors centrifuges (14) mutuellement coaxiaux positionnés sur des côtés opposés par rapport au moteur (13), et
- un carter (16) ayant un siège central cylindrique (18, 38) pour abriter le moteur électrique (13) et de section de convoyage (20) dans lesquels sont abrités les rotors respectifs (14), chaque section de convoyage (20) ayant une surface frontale extérieure (24), une surface frontale intérieure (26) et une surface incurvée (28) qui définissent autour du rotor respectif (14) un conduit en forme de volute (22) pour transporter le flux d'air produit par le rotor respectif (14),
**caractérisé en ce que** le carter (16) comprend une coque supérieure amovible (32) ayant une portion centrale avec un siège semi-cylindrique (38) définissant la partie supérieure du siège cylindrique (18, 38) pour abriter le moteur électrique (13) et deux portions latérales (32), chacune desdites portions latérales (32) ayant une paroi radiale (26a) définissant la partie supérieure de la surface frontale intérieure (26) de la section de convoyage respective (20) et une paroi incurvée (28a) définissant une partie de la surface latérale incurvée (28) de la section de convoyage respective (20), la forme de la coque supérieure amovible (32) étant telle que le ventilateur centrifuge (12) peut être extrait hors du carter (16) vers le haut après l'enlèvement de la coque (32).

2. Groupe de ventilation selon la revendication 1, **caractérisé en ce que** la paroi frontale extérieure (24) de chaque section de convoyage (20) est équipée d'une ouverture (30) pour l'entrée d'un flux d'air tourné vers la partie intérieure du ventilateur centrifuge respectif (14).

3. Groupe de ventilation selon la revendication 1, **caractérisé en ce que** la coque supérieure amovible (32) et la partie restante du carter (16) sont équipées de moyens de fixation (34, 36) qui coopèrent mutuellement.
